# EUROPEAN PATENT SPECIFICATION

(11) **EP 3 479 697 B1**
(45) Date of publication and mention of the grant of the patent: **21.10.2020**
(21) Application number: 18203110.4
(22) Date of filing: 29.10.2018
(51) Int. Cl.: A21C 9/08, A21C 7/01

(54) **DOUGH PROCESSING ASSEMBLY**
TEIGVERARBEITUNGSANORDNUNG
ENSEMBLE DE TRAITEMENT DE PÂTE

(30) Priority: 06.11.2017 IT 201700125578
(43) Date of publication of application: 08.05.2019
(73) Proprietor: Minipan S.r.l., 48024 Massa Lombarda (RA) (IT)
(72) Inventor: FUSARI, Franco, 47843 MISANO ADRIATICO RN (IT); FUSARI, Bruno, 48012 BAGNACAVALLO RA (IT)
(74) Representative: Modiano, Micaela Nadia

(56) References cited:
- EP-A1- 2 460 410
- WO-A1-2017/070544
- GB-A- 909 905
- NL-A- 8 300 815
- US-A- 2 655 876
- US-A- 4 299 550
- US-A- 5 196 223
- US-A1- 2004 076 725

## Description

The present invention relates to a dough processing assembly, particularly suitable for processing doughs with a high content of water, therefore with a sticky behavior and without a consolidated shape.

A dough that is particular rich in water must be provided in order to produce some specific types of bakery products.

In particular, this type of dough is used to produce focaccias, baguettes and other very widely used types of bread.

In order to obtain a finished product with the best organoleptic characteristics and the correct segregation of air bubbles (optimum rising), the dough must undergo some processes intended for the correct forming of the so-called gluten matrix.

The long protein chains, held together by bonds between two sulfur atoms (disulfide bridges) which form between individual protein molecules, must be arranged so as to create a matrix (gluten matrix) that ensures the segregation of the gaseous bubbles that are generated during rising and which, during baking, will force the bakery product to swell.

The dough must be folded onto itself one or multiple times along at least one first direction: more often, the dough is folded onto itself or rolled up along at least two mutually perpendicular directions in order to generate a matrix with fine and uniform mesh.

This process is normally performed manually (in a handcrafted manner) and requires, especially for important dough volumes, the simultaneous intervention of multiple operators. The high percentage of water that is present in the dough makes it very sticky and increases the difficulty of the operations that must be performed by the operators.

In the case of large-scale productions, it is necessary to provide for different teams of operators to perform the operations for folding the dough in different stations, in order to provide a continuous supply of dough to the subsequent stations for the forming of the products and for their baking.

Documents GB909905 A, US4299550 A and EP2460410 A1 describe different dough processing assemblies.

The aim of the present invention is to solve the problems described above, proposing a dough processing assembly that is suitable to fold onto themselves even doughs containing very large percentages of water.

Within this aim, an object of the invention is to propose a dough processing assembly that ensures the forming of a dense gluten matrix in the dough itself.

Another object of the invention is to propose a dough processing assembly that can process even large masses of dough at a time.

A further object of the present invention is to provide a dough processing assembly that has low costs, is relatively simple to provide and is safe in application.

This aim and these and other objects that will become better apparent hereinafter are achieved by a dough processing assembly according to claim 1. The dependent claims describe optional embodiments of the invention.

Further characteristics and advantages of the invention will become better apparent from the description of a preferred but not exclusive embodiment of the dough processing assembly according to the invention, illustrated by way of nonlimiting example in the accompanying drawings, wherein:

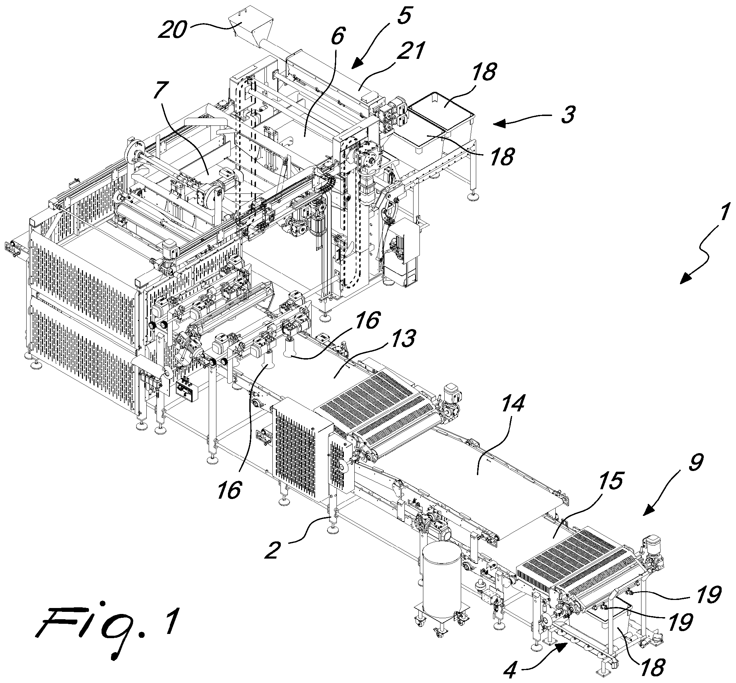

Figure 1 is a first perspective view of a dough processing assembly according to the invention;

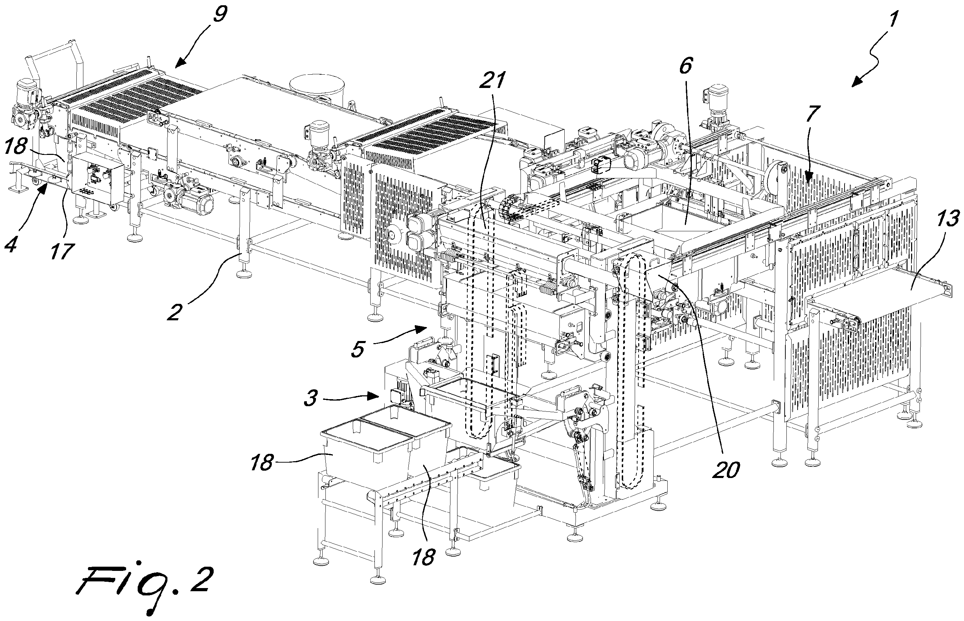

Figure 2 is a second perspective view of the assembly of Figure 1;

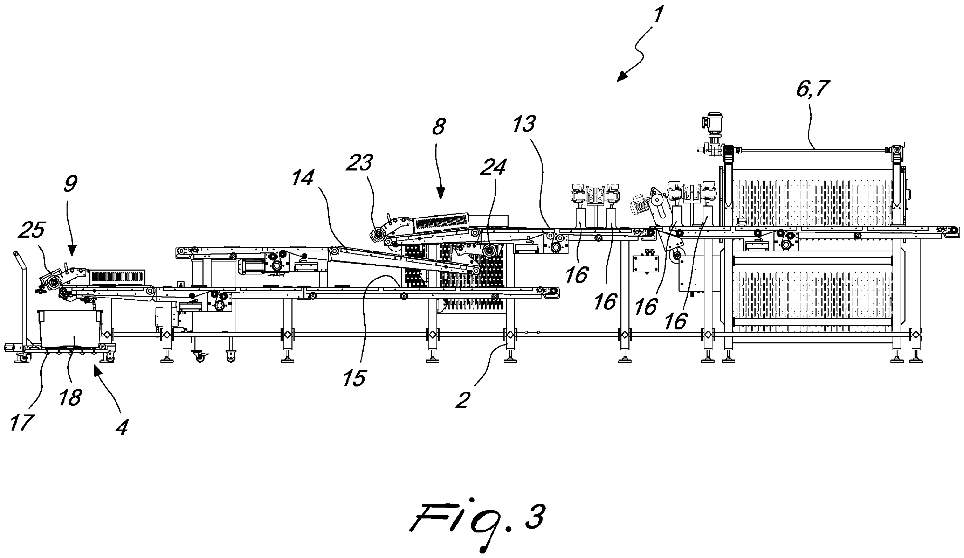

Figure 3 is a partially sectional side view of the assembly of Figure 1;

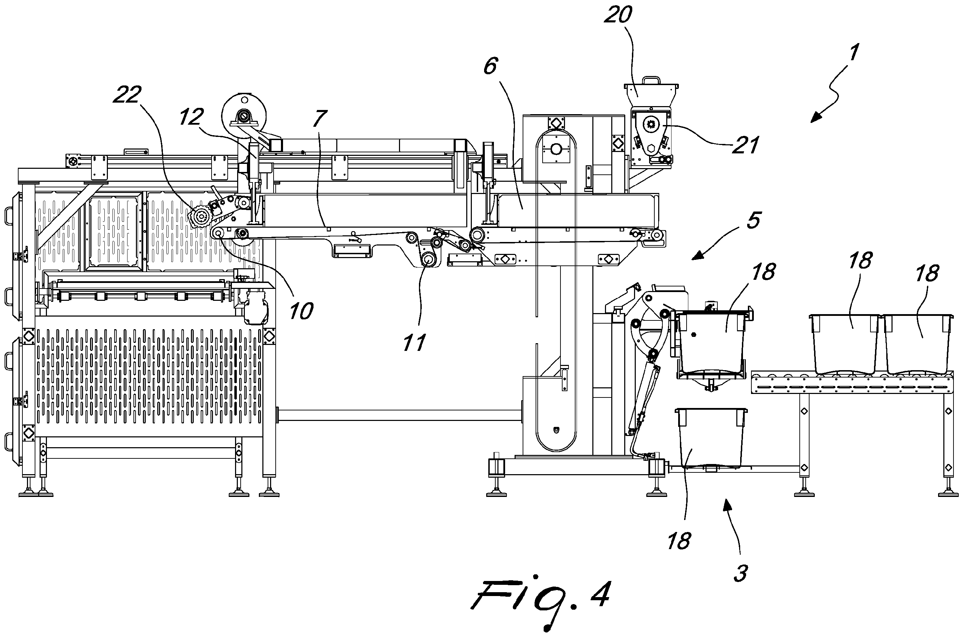

Figure 4 is a partially sectional front view of the assembly of Figure 1.

With particular reference to the figures cited above, the reference numeral 1 generally designates a dough processing assembly according to the invention.

The dough processing assembly 1 comprises a fixed frame 2, a dough entry area 3 and an exit area 4 for the dough subjected to the above-cited processes. The assembly 1, at the entry area 3, comprises a station 5 for loading predefined quantities of dough in a receptacle 6.

The receptacle 6, according to a preferred embodiment, is formed between respective containment walls, at least one of which is movable.

At least one first conveyor belt 7 is arranged downstream of the movable wall of the receptacle 6 and is adapted to receive and translate the dough.

Actually, the base surface of the receptacle 6 also is constituted by a conveyor belt unit: the removal of the movable wall allows the conveyor belt unit to transfer the dough to the at least one first belt 7. The different travel speed of the conveyor belt unit with respect to the at least one first belt 7 produces a stretching of the dough, which therefore elongates in the traction direction, facilitating a substantially directional arrangement of the gluten chains that are present in the dough.

The assembly 1 furthermore comprises at least one second conveyor belt, which is perpendicular and arranged below the first belt 7, for receiving the dough from the first belt 7.

A terminal station 9 for dispensing the dough (after the assembly 1 has subjected it to the appropriate processes), at the exit area 4, is provided with means for folding the dough onto itself, for the juxtaposition of contiguous surfaces thereof socially fine configurations such as a layering, a roll, and the like.

In practice, the dough folding means are designed to layer and/or roll up the dough (appropriately stretched along a specific direction), so that its external surfaces are progressively juxtaposed: the layering and/or rolling ensure that the gluten protein chains in the dough are superimposed, defining an ordered three-dimensional distribution thereof which generates the gluten matrix required for correct rising and baking of the bakery product that will be provided by means of said dough.

With particular reference to an embodiment of unquestionable interest in practice and in application, the at least one first conveyor belt 7 is supported by specific brackets, which in turn can move with respect to the fixed frame 2; the first belt 7 is furthermore provided with a movable end roller 10, which allows it to change its own length, allowing a movement of its terminal end (forward and backward) along the direction of advancement of the dough on said belt 7.

The movable end roller 10 is actuated by respective first actuators and the variation of the length of the useful surface of the first belt 7, designed to convey the dough, is ensured by the presence of a buffer at which the belt 7 is bent along a predefined path of variable extent. The variation of the extent of the path defined by the buffer is achieved by virtue of the presence of an additional roller 11 for guiding the belt 7, which is conveniently movable along a predefined stroke (actuated by elastic means or by pushers controlled by the same control and management unit that controls the movement of said end roller 10).

The brackets can move with respect to the frame 2 by means of respective second actuators 12 in order to vary the height of the belt 7 (in particular of its terminal end), with a consequent variation of its distance from the second conveyor belt 8.

The combination of the motion imparted by the first and second actuators 12 allows to deliver the dough onto the surface of the second conveyor belt 8 in a layered configuration, with related folded external surfaces, so as to mutually fit together.

Furthermore, it is specified that by analyzing an embodiment of unquestionable effectiveness, the at least one second conveyor belt 8 preferably comprises a plurality of moving belts 13, 14 and 15 which are arranged in a cascade.

The moving belts 13, 14 and 15 have progressively increasing travel speeds in order to generate at the same time translation and stretching, which consists of an elongation along a predefined direction, of the dough.

The different speeds of the moving belts 13, 14 and 15 in fact entail that the dough is entrained by the downstream belt (14 or 15) faster than the speed with which it arrives from the upstream belt (respectively 13 or 14): this produces a stretching of the dough which tends to flatten and elongate in the advancement direction. This elongation along a predefined direction contributes to an alignment/ordering of the gluten protein chains.

With particular reference to the constructive embodiment shown in the accompanying figures, the belt 13 is the one that is at the greatest height and is partially surmounted (at its initial region) by the first conveyor belt 7.

Multiple conveyance rollers 16 with a preferably vertical axis are arranged along the belt 13: these rollers 16 about against the lateral surfaces of the dough that is present on the belt 13, preventing it from being able to expand in terms of width. If one operates on considerable dough masses (for example weighing several tens of kilograms), transverse expansion of the dough (caused by the effect of its own weight) might even make it spill beyond the edges of said belt 13: the conveyance rollers 16 prevent the occurrence of this condition, which would compromise the correct operation of the entire assembly.

The movable belt 14 is instead arranged below the belt 13, inclined with respect to it and directed backward: this particular arrangement allows to use the decrease in conveyance height to subject the dough to further stretching, all with a considerable containment of space occupation, since the belt 13 is juxtaposed against a portion of the belt 14, minimizing the overall longitudinal space occupation. Furthermore, it is specified that the means for folding the dough onto itself, comprised in the exit area 4, comprise a support 17 which can slide along the direction of the terminal portion of the at least one second belt 8 (in particular the terminal portion of the belt 15).

By means of the translation of a container 18, arranged on the support 17, with an alternating motion along a predefined stroke during the dispensing of the dough from the belt 15, storage of said dough in the container 18 is caused so that it is arranged with folded and juxtaposed surfaces.

In greater detail, if one adjusts the (forward-backward) oscillation speed of the container 18 on the sliding support 17, according to a stroke that is equal to the length of said container 18, as a function of the exit speed of the dough from the belt 15, it is possible to deposit a first layer of dough onto the bottom of the container 18 and then, by reversing the motion of the container 18, superimpose a second layer on the first layer. By repeating this operation until the dough on the belt 15 has ended, it is thus possible to store the dough in the container 18 with a configuration that ensures the forming of a gluten matrix (of the gluten protein chains) that is particularly regular and evenly distributed in the dough volume.

The movement of the container 18 on the support 17 can be entrusted for example to an operator who manually handles the oscillation of the container 18 during the dispensing of the dough from the belt 15.

According to a completely automatic constructive solution, the support 17 for the container 18 might instead be advantageously able to slide and translate by virtue of the action of respective actuators.

In this case, a specific control and management unit is designed to control these actuators, in order to adjust their stroke and their rule of motion, as a function of the exit speed of the dough from the belt 15.

With particular reference to a constructive solution which is alternative to the one described previously, the means for folding the dough onto itself comprised in the exit area 4 may favorably comprise a collection carousel, for rolling up onto itself the dough dispensed by the terminal portion of the at least one second belt 8 (in particular the terminal portion of the belt 15) and delivering it into a collection container 18 arranged proximate to the carousel.

Rolling up can be obtained by means of a roller which lifts the initial end of the dough that arrives from the belt 15 and tips it on to the top of the dough that is contiguous thereto, proceeding with this operation as the dough advances until it has been rolled up completely, generating a block of dough that has a substantially cylindrical shape (more correctly, barrel-shaped).

At this point, by means of an ordinary pick and place device it is possible to pick up the block of rolled up dough and deliver it in a container 18 which is arranged proximate to the exit area 4.

It is useful to specify that the terminal portion of the at least one second belt 8 (in particular the terminal portion of the belt 15) can conveniently comprise nozzles 19 for dispensing a liquid chosen preferably from water, oil, emulsion of water and oil, water comprising substances chosen from flavorings, coloring agents, preservatives, raising agents and additives in general, and oil comprising substances chosen from flavorings, coloring agents, preservatives, raising agents and additives in general.

During the layering of the dough in the container 18 and/or during the rolling of the dough onto itself, the nozzles 19 atomize the liquid, which may have multiple purposes.

First of all, the liquid may contribute to a further hydration of the dough or to an addition of oil, in accordance with the requirements and the recipe of the product that must be provided with said dough.

In some cases, the liquid can contribute to change the characteristics of the dough, which will cause a consequent modification of the organoleptic characteristics and/or of the appearance and/or of the rising of the finished product that will be provided with said dough.

It is specified furthermore that the assembly 1 comprises at least one hopper 20 for containing a powdery substance chosen among flour, semolina, starch and the like. It is not excluded that the powdery substance may also comprise flavoring additives, preservatives, coloring agents, raising agents and other kinds of additives.

The hopper 20 is connected to elements 21 for the uniform distribution of the substance on at least one portion of a respective belt, chosen between the at least one first belt 7 and the at least one second belt 8 (in particular at least one of the belts 13, 14 and 15).

The distribution of flour, semolina or other powdery substances on the belts 7 and 8 (belts 13, 14 and 15) facilitates the separation of the dough from them and therefore allows the assembly 1 to operate for long operating periods without requiring maintenance and/or cleaning activities.

The nozzles 19 are therefore useful also to restore the correct rate of humidity in the dough, which is modified by the adhesion of the flour, which is present on the various conveyors, to its external surfaces.

With reference to a particularly productive and advanced constructive solution, it is pointed out that between the initial loading station 5 and the exit area 4 it is possible to provide advantageously a line for the automatic conveyance of containers 18.

Such line deals with the pickup of the containers 18 emptied of the dough in the initial loading station 5 and their transfer to the exit area 4 to receive the dough appropriately folded onto itself.

In this regard, it is specified that the containers 18 may reach the initial loading station 5 appropriately arranged in a row on a conveyance lane. A pickup apparatus of the station 5 can then grip a respective container 18 (the first one of the row, i.e., the one closest to the station 5), lift it to a preset level at which it surmounts the receptacle 6, and tip its content into said receptacle.

The speed of the operation and the retention of the container 18 in the tipped arrangement above the receptacle 6 are determined by the particular type of dough and by the corresponding content of water (for example a highly hydrated dough is stickier and therefore will tend to adhere to the container 18, thus requiring more time for complete exit from it).

Furthermore, it is deemed useful to specify that lobe-type rollers 22, 23, 24 and 25 are arranged downstream of each belt 7 and 8 (in particular downstream of each belt 13, 14 and 15).

The particular shape of the lobe-type rollers 22, 23, 24 and 25, the possibility to adjust their distance from the surface of the respective belt 7, 8) (belt 13, 14 and 15), as well as the optional motorization of the lobe-type rollers 22, 23, 24 and 25, will ensure a mechanical action on the dough, which can be likened to a massage which facilitates the relaxation of any internal tensions of the gluten protein chains.

Advantageously, the present invention solves the problems described previously, proposing a dough processing assembly 1 which is suitable to fold onto themselves even doughs that contain very high percentages of water.

The particular shape of the components of the assembly 1 and the presence of elements for the lateral containment of the dough, as well as of the dispensers of powders (such as flour, semolina and the like) allow to manage easily even doughs that are particularly rich in water and therefore have a sticky behavior and lack a definite shape.

Efficiently, the assembly 1 according to the invention ensures the forming of a dense gluten matrix in the dough.

The subsequent folds that the assembly 1 provides on the dough are such as to ensure optimum distribution of the gluten protein chains. Positively, the assembly 1 according to the invention can also process large masses of dough at a time. Validly, the present invention provides a dough processing assembly that is relatively simple to provide in practice and has low costs: the assembly according to the invention constitutes an improvement of assured application.

The invention thus conceived is susceptible of numerous modifications and variations, all of which are within the scope of the appended claims; all the details may furthermore be replaced with other technically equivalent elements.

In the shown embodiments, individual characteristics, given in relation to specific examples, may actually be interchanged with other different characteristics of other examples of embodiment.

In practice, the materials used, as well as the dimensions, may be any according to the requirements and the state of the art.

This application claims priority from Italian Patent Application No. 102017000125578.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A dough processing assembly comprising a fixed frame (2), an entry area (3) and an exit area (4) for the dough subjected to said processes, wherein the assembly further comprises
- at said entry area (3), a station (5) for loading predefined quantities of dough in a receptacle (6),
- at least one first conveyor belt (7), arranged downstream of said receptacle (6) and adapted to receive and translate said dough,
- at least one second conveyor belt (8), which is perpendicular and arranged below said first belt (7), for receiving said dough from said first belt (7),
- a station (9) for dispensing said dough, at said exit area (4), provided with means for folding said dough onto itself, for the juxtaposition of contiguous surfaces thereof, wherein said at least one first conveyor belt (7) is movable, with respect to said fixed frame (2), by means of respective first actuators along at least one first direction which is parallel to a direction along which the dough advances on said first belt (7), said at least one first conveyor belt (7) being movable, with respect to said fixed frame (2), by means of respective second actuators (12) for varying its own height, with consequent variation of its distance from said second conveyor belt (8), the combination of the motion imposed by the first and second actuators (12) allowing a delivery of said dough onto the surface of said second conveyor belt (8) in a layered configuration, with corresponding external surfaces which are folded, fitted together and juxtaposed.

2. The assembly according to claim 1, **characterized in that** said at least one second conveyor belt (8) comprises a plurality of moving belts (13, 14, 15) in a cascade which have progressively increasing travel speeds for the translation and stretching, which consists of an elongation along a predefined direction, of said dough.

3. The assembly according to claim 1, **characterized in that** said means for folding said dough onto itself, comprised in said dispensing station (9), comprise a support (17) which can slide along a direction of a terminal portion of said at least one second belt (8), the translation of a container (18), arranged on said support (17), with an alternating motion along a predefined stroke, during the dispensing of the dough, causing a storage thereof with folded and juxtaposed surfaces.

4. The assembly according to claim 3, **characterized in that** said support (17) for said container (18) can slide and translate by virtue of the action of respective actuators, a respective control and management unit actuating said actuators for the adjustment of their stroke and of their rule of motion.

5. The assembly according to one or more of the preceding claims, **characterized in that** said means for folding said dough onto itself, comprised in said dispensing station (9), comprise a collection carousel for rolling up the dough dispensed by said terminal portion of said at least one second belt (8) and for delivering it in a collection container (18) arranged proximate to said carousel.

6. The assembly according to one or more of the preceding claims, **characterized in that** said terminal portion of said at least one second belt (8) comprises nozzles (19) for dispensing a liquid chosen preferably from water, oil, emulsion of water and oil, water comprising substances chosen from flavorings, coloring agents, preservatives and additives in general, and oil comprising substances chosen from flavorings, coloring agents, preservatives and additives in general.

7. The assembly according to one or more of the preceding claims, **characterized in that** it comprises at least one hopper (20) for the containment of a powdery substance chosen from flour, semolina, starch and the like, said at least one hopper (2) being connected to elements (21) for a uniform distribution of said substance on at least one portion of a respective belt (7, 8, 13, 14, 15), chosen between said at least one first belt (7) and at least one second belt (8, 13, 14, 15).

8. The assembly according to one or more of the preceding claims, **characterized in that** between said station (5) for loading predefined quantities of dough and said dispensing station (9) for dispensing said dough there is a line for automatic conveyance of containers (18), for the pickup of the containers (18) emptied of the dough in said station (5) for loading and their transfer into the terminal dispensing station (9) for receiving the dough appropriately folded onto itself.

## Patentansprüche

1. Eine Teigverarbeitungsanordnung, die einen festen Rahmen (2), einen Eintrittsbereich (3) und einen Austrittsbereich (4) für den Teig umfasst, der den Prozessen unterzogen wird, wobei die Anordnung weiter Folgendes umfasst:
- in dem Eintrittsbereich (3), eine Station (5) zum Beladen vordefinierter Mengen Teig in einen Behälter (6),
- mindestens ein erstes Förderband (7), angeordnet stromabwärts von dem Behälter (6) und ausgebildet, um den Teig zu empfangen und zu transportieren,
- mindestens ein zweites Förderband (8), das senkrecht und unterhalb des ersten Bandes (7) angeordnet ist, um den Teig von dem ersten Band (7) zu empfangen,
- eine Station (9) zum Abgeben des Teigs an dem Austrittsbereich (4), ausgestattet mit Mitteln zum Zusammenfalten des Teigs zur Juxtaposition benachbarter Oberflächen desselben; wobei das mindestens eine erste Förderband (7) mit Bezug auf den festen Rahmen (2) mit Hilfe entsprechender erster Antriebselemente in mindestens einer ersten Richtung beweglich ist, die parallel zu einer Richtung ist, in der sich der Teig auf dem ersten Band (7) vorwärtsbewegt; wobei das mindestens eine erste Förderband (7) mit Bezug auf den festen Rahmen (2) mit Hilfe entsprechender zweiter Antriebselemente (12) beweglich ist zum Verändern seiner eigenen Höhe, mit daraus folgender Veränderung seines Abstands von dem zweiten Förderband (8); wobei die Kombination der von dem ersten und dem zweiten Antriebselement (12) verliehenen Bewegung eine Abgabe des Teigs auf die Oberfläche des zweiten Förderbandes (8) in einer geschichteten Anordnung ermöglicht, mit entsprechenden äußeren Oberflächen, die gefaltet, zusammengelegt und benachbart angeordnet sind.

2. Die Anordnung gemäß Anspruch 1, **dadurch gekennzeichnet, dass** das mindestens eine zweite Förderband (8) eine Vielzahl von Laufbändern (13, 14, 15) in einer Kaskade umfasst, die progressiv zunehmende Verfahrgeschwindigkeiten für Translation und Dehnung haben, welche in einer Verlängerung des Teigs in einer vordefinierten Richtung besteht.

3. Die Anordnung gemäß Anspruch 1, **dadurch gekennzeichnet, dass** die Mittel zum Zusammenfalten des Teigs, die in der Abgabestation (9) umfasst sind, einen Träger (17) umfassen, der in einer Richtung eines Endabschnitts des mindestens einen zweiten Bandes (8) gleiten kann, wobei die Translation eines auf dem Träger (17) angeordneten Behälters (18) mit einer alternierenden Bewegung entlang einem vordefinierten Hub während der Abgabe des Teigs eine Lagerung desselben mit gefalteten und benachbart angeordneten Oberflächen veranlasst.

4. Die Anordnung gemäß Anspruch 3, **dadurch gekennzeichnet, dass** der Träger (17) für den Behälter (18) durch die Wirkung entsprechender Antriebselemente gleiten und eine Translationsbewegung durchführen kann, wobei eine entsprechende Steuerungs- und Verwaltungseinheit die Antriebselemente zur Anpassung ihres Hubs und ihrer Bewegungsregel antreibt.

5. Die Anordnung gemäß einem oder mehreren der obigen Ansprüche, **dadurch gekennzeichnet, dass** die Mittel zum Zusammenfalten des Teigs, die in der Abgabestation (9) umfasst sind, ein Sammelkarussell zum Zusammenrollen des Teigs umfassen, der von dem Endabschnitt des mindestens einen zweiten Bandes (8) abgegeben wird, und zum Abgeben desselben in einen Sammelbehälter (18), der angrenzend an das Karussell angeordnet ist.

6. Die Anordnung gemäß einem oder mehreren der obigen Ansprüche, **dadurch gekennzeichnet, dass** der Endabschnitt des mindestens einen zweiten Bandes (8) Düsen (19) zum Abgeben einer Flüssigkeit umfasst, die vorzugsweise gewählt ist aus Wasser, Öl, Emulsion von Wasser und Öl, Wasser, das Substanzen umfasst, die gewählt sind aus Geschmacksstoffen, Farbstoffen, Konservierungsstoffen und Zusatzstoffen im Allgemeinen, und Öl, das Substanzen umfasst, die gewählt sind aus Geschmacksstoffen, Farbstoffen, Konservierungsstoffen und Zusatzstoffen im Allgemeinen.

7. Die Anordnung gemäß einem oder mehreren der obigen Ansprüche, **dadurch gekennzeichnet, dass** sie mindestens einen Trichter (20) für die Aufnahme einer pulverigen Substanz umfasst, gewählt aus Mehl, Grieß, Stärke und dergleichen; wobei der mindestens eine Trichter (2) mit Elementen (21) für eine homogene Verteilung der Substanz auf mindestens einem Abschnitt eines entsprechenden Bandes (7, 8, 13, 14, 15) verbunden ist, gewählt aus mindestens einem ersten Band (7) und mindestens einem zweiten Band (8, 13, 14, 15).

8. Die Anordnung gemäß einem oder mehreren der obigen Ansprüche, **dadurch gekennzeichnet, dass** sich zwischen der Station (5) zum Eintragen vordefinierter Mengen Teig und der Abgabestation (9) zum Abgeben des Teigs eine Linie für die automatische Beförderung der Behälter (18), für die Aufnahme der Behälter (18), die in der Eintragsstation (5) von Teig geleert wurden, und ihren Transfer in die Endabgabestation (9) zum Aufnehmen des Teigs, der korrekt zusammengefaltet wurde, befindet.

## Revendications

1. Ensemble de transformation de pâte comportant un bâti fixe (2), une zone d'entrée (3) et une zone de sortie (4) pour la pâte soumise auxdits processus, dans lequel l'ensemble comporte en outre
- au niveau de ladite zone d'entrée (3), une station (5) pour charger des quantités prédéfinies de pâte dans un bac (6),
- au moins une première bande de convoyage (7), agencée en aval dudit bac (6) et adaptée pour recevoir et déplacer en translation ladite pâte,
- au moins une seconde bande de convoyage (8), qui est perpendiculaire et agencée sous ladite première bande (7), pour recevoir ladite pâte provenant de ladite première bande (7),
- une station (9) pour distribuer ladite pâte, au niveau de ladite zone de sortie (4), pourvue de moyens pour plier ladite pâte sur elle-même, pour la juxtaposition de surfaces contiguës de celle-ci, dans lequel ladite au moins une première bande de convoyage (7) est mobile, par rapport audit bâti fixe (2), au moyen de premiers actionneurs respectifs le long d'au moins une première direction qui est parallèle à une direction le long de laquelle la pâte avance sur ladite première bande (7), ladite au moins une première bande de convoyage (7) étant mobile, par rapport audit bâti fixe (2), au moyen de seconds actionneurs (12) respectifs pour faire varier sa propre hauteur, avec une variation conséquente de sa distance par rapport à ladite seconde bande de convoyage (8), la combinaison du mouvement imposé par les premiers et seconds actionneurs (12) permettant une distribution de ladite pâte sur la surface de ladite seconde bande de convoyage (8) dans une configuration en couches, avec des surfaces externes correspondantes qui sont pliées, assemblées et juxtaposées.

2. Ensemble selon la revendication 1, **caractérisé en ce que** ladite au moins une seconde bande de convoyage (8) comporte une pluralité de bandes mobiles (13, 14, 15) en cascade qui ont des vitesses de déplacement augmentant progressivement pour la translation et l'étirage, qui consiste en un allongement le long d'une direction prédéfinie, de ladite pâte.

3. Ensemble selon la revendication 1, **caractérisé en ce que** lesdits moyens pour plier ladite pâte sur elle-même, compris dans ladite station de distribution (9), comportent un support (17) qui peut glisser le long d'une direction d'une partie terminale de ladite au moins une seconde bande (8), la translation d'un récipient (18), agencé sur ledit support (17), avec un mouvement alternatif le long une course prédéfinie, pendant la distribution de la pâte, entraînant un stockage de celle-ci avec des surfaces pliées et juxtaposées.

4. Ensemble selon la revendication 3, **caractérisé en ce que** ledit support (17) pour ledit récipient (18) peut glisser et se déplacer en translation par l'action d'actionneurs respectifs, une unité de commande et de gestion respective actionnant lesdits actionneurs pour le réglage de leur course et de leur règle de mouvement.

5. Ensemble selon une ou plusieurs des revendications précédentes, **caractérisé en ce que** lesdits moyens pour plier ladite pâte sur elle-même, compris dans ladite station de distribution (9), comportent un carrousel de collecte pour enrouler la pâte distribuée par ladite partie terminale de ladite au moins une seconde bande (8) et pour l'acheminer dans un récipient de collecte (18) agencé près dudit carrousel.

6. Ensemble selon une ou plusieurs des revendications précédentes, **caractérisé en ce que** ladite partie terminale de ladite au moins une seconde bande (8) comporte des buses (19) pour distribuer un liquide choisi de préférence parmi de l'eau, de l'huile, une émulsion d'eau et d'huile, l'eau comportant des substances choisies parmi des aromatisants, des agents colorants, des conservateurs et des additifs en général, et l'huile comportant des substances choisies parmi des aromatisants, des agents colorants, des conservateurs et des additifs en général.

7. Ensemble selon une ou plusieurs des revendications précédentes, **caractérisé en ce qu'**il comporte au moins une trémie (20) pour le confinement d'une substance pulvérulente choisie parmi de la farine, de la semoule, de l'amidon et analogue, ladite au moins une trémie (2) étant reliée à des éléments (21) pour une distribution uniforme de ladite substance sur au moins une partie d'une bande (7, 8, 13, 14, 15) respective, choisie entre lesdites au moins une première bande (7) et au moins une seconde bande (8, 13, 14, 15).

8. Ensemble selon une ou plusieurs des revendications précédentes, **caractérisé en ce qu'**entre ladite station (5) pour charger des quantités prédéfinies de pâte et ladite station de distribution (9) pour distribuer ladite pâte, il y a une ligne pour le transport automatique de récipients (18), pour le ramassage des conteneurs (18) vidés de la pâte dans ladite station (5) pour le chargement et leur transfert dans la station de distribution terminale (9) pour recevoir la pâte pliée sur elle-même de manière appropriée.
